# EUROPÄISCHE PATENTSCHRIFT

(11) **EP 3 095 500 B1**
(45) Veröffentlichungstag und Bekanntmachung des Hinweises auf die Patenterteilung: **17.04.2019**
(21) Anmeldenummer: 16154259.2
(22) Anmeldetag: 04.02.2016
(51) Int. Cl.: B01D 35/04, B01D 29/66, B01D 29/70, B01D 29/92, E03B 7/07

(54) **DRUCKMINDERER-FILTER-ANORDNUNG**
PRESSURE REDUCING FILTER ARRANGEMENT
SYSTEME DE FILTRE-REDUCTEUR DE PRESSION

(30) Priorität: 13.05.2015 DE 202015102475 U
(43) Veröffentlichungstag der Anmeldung: 23.11.2016
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 1 688 170
- EP-A2- 0 401 633
- DE-A1- 4 343 180
- DE-A1-102006 036 123
- DE-U1- 7 631 815

## Beschreibung

### Technisches Gebiet

Die Erfindung betrifft einen Rückspülfilter zum Filtern von Trink- oder Brauchwasser, welcher von einer Betriebsstellung, bei welcher Wasser vom Einlass durch den Filter zum Auslass geleitet wird, zum Rückspülen in eine Rückspülstellung umschaltbar ist, bei welcher Wasser vom Einlass in umgekehrter Richtung durch den Filter zum Ablauf leitbar ist.

Wasserfilter dienen dazu, Trink- oder Brauchwasser zu filtern. Dabei bleiben Schmutzpartikel im Filtermaterial hängen. Mit der Zeit setzt sich das Filtermaterial zu. Dann gelangt weniger oder gar kein Wasser mehr durch den Filter. Es ist also erforderlich, den Filter regelmäßig zu reinigen oder zu erneuern. Es gibt Filter mit mit Filtermaterial, das vollständig ausgetauscht wird. Bei Rückspülfiltern wird die Strömung durch das Filtermaterial regelmäßig umgekehrt. Dann werden die Schmutzpartikel im Filtermaterial von der Strömung mitgerisssen und das Rückspülwasser durch einen Ablauf entsorgt.

### Stand der Technik

Unter dem Handelsnamen "Drufi" vertreibt die Anmelderin Druckminderer-Filterkombinationen, bei denen ein Druckminderer im Innenraum eines zylindrischen Filters angeordnet ist. Eine solche Druckminderer-Filterkombination ist in EP 0 201 633 A2 gezeigt. Zum Reinigen des Filters wird ein zylindrisches Filterelement an einer ringförmigen Saugeinrichtung vorbeibewegt. Dabei werden Schmutzpartikel von der Filteroberfläche abgesaugt.

DE 10 2009 003 343 A1 der Anmelderin offenbart einen Filter, bei dem ein Druckminderer in einem Rückspülfilter angeordnet ist.

EP 1 688 170 B1 der Anmelderin offenbart eine Filterarmatur mit Strömungszähler. Die Filterarmatur ist ein Rückspülfilter, bei dem zwei Filter vorgesehen sind. Ein erster Filter zum Filtern des Wassers in einer Betriebsstellung und ein zweiter Filter zum Filtern des für die Rückspülung vorgesehenen Wassers. Nachteilig bei der bekannten Anordnung ist es, dass sich vor allem bei stark verschmutztem Wasser auch der zweite Filter mit der Zeit zusetzt.

### Offenbarung der Erfindung

Es ist Aufgabe der Erfindung, einen Rückspülfilter zu schaffen, der einfach und kostengünstig herstellbar ist und bei dem auch der zweite Filter für das Rückspülwasser einer Rückspülung unterzogen werden kann.

Erfindungsgemäß wird die Aufgabe mit einem Rückspülfilter der eingangs genannten Art gelöst, enthaltend
(a) eine Anschlussarmatur mit einem Einlass und einem Auslass;
(b) eine Filtertasse mit einem verschließbaren Ablauf;
(c) ein zwischen einem oberen und einem unteren Anschlag axialbeweglich geführtes Filterelement mit einem oberen Filterabschnitt und einem unteren Filterabschnitt, welches derart in der Filtertasse angeordnet ist, dass ein mit dem Einlass verbindbarer äußerer Ringraum zwischen dem unteren Filterabschnitt und der Filtertasse gebildet ist;
(d) einen Ringvorsprung aussen auf dem Filterelement zwischen dem oberen Filterabschnitt und dem unteren Filterabschnitt zum Trennen des äußeren Ringraums vom Bereich außerhalb des oberen Filterabschnitts, wobei der Ringvorsprung mit einer Schulter auf der Innenwandung der Filtertasse derart zusammenwirkt, dass
   (i) die Verbindung vom Einlass zum äußeren Ringraum in einer oberen Stellung des Filterelements geöffnet ist und in einer unteren Stellung des Filterelements blockiert ist;
   (ii) die Verbindung vom Einlass zum Bereich außen um den oberen Filterabschnitt in der oberen Stellung des Filterelements blockiert ist und der unteren Stellung des Filterelements geöffnet ist; und
   (iii) die Verbindung vom Einlass zum äußeren Ringraum in einer Zwischenstellung des Filterelements geöffnet ist, während die Verbindung vom Einlass zum Bereich außen um den oberen Filterabschnitt blockiert ist;
(e) einen oder mehrere Kanäle zum Verbinden des Bereichs außen um den oberen Filterabschnitt mit dem Bereich unterhalb des unteren Filterabschnitts;
(f) ein Federkraft-beaufschlagtes Bodenteil zum Verschließen des Filterelements am unteren Ende mit Öffnungen zum Verbinden des Innenraums des Filterelements mit dem mit dem Ablauf verbundenen Bodenbereich der Filtertasse; und
(g) ein in dem Bodenteil axialverschieblich geführtes, Federkraft-beaufschlagtes Hubelement, welches in einer ersten Endstellung die Kanäle und in einer zweiten Endstellung die Öffnungen im Bodenteil verschließt, wobei die auf das Bodenteil wirkende Federkraft größer ist, als die auf das Hubelement wirkende Federkraft.

Anders als bekannte Rückspülfilter wird bei der vorliegenden Erfindung zusätzlich zur Betriebs- und Rückspülstellung eine Zwischenstellung eingenommen, bei der obere Filterabschnitt rückgespült wird. In der Betriebsstellung befindet sich das Filterelement in der oberen Stellung. Dann ist der Einlass mit dem Ringraum verbunden. Vom Ringraum fließt das Wasser durch das Filterelement nach innen und von dort zum Auslass. In der Rückspülstellung befindet sich das Filterelement in einer unteren Stellung. Dann ist die Verbindung zum Ringraum blockiert. Stattdessen fließt das Wasser durch den oberen Filterabschnitt nach innen und im unteren Filterabschnitt wieder in umgekehrter Richtung, d.h. in Rückspülrichtung nach außen in den Ringraum, weil die Öffnungen im Bodenteil in dieser Stellung verschlossen sind. In der Zwischenstellung ist das Filterelement noch in der oberen Stellung, aber das Hubelement wird durch den Differenzdruck, der bei Öffnen des Ablaufs entsteht, bereits nach unten bewegt. In dieser Stellung werden die Kanäle freigegeben. Wasser kann durch den Ringraum in das Innere des Filterelements fließen und in umgekehrter Richtung aus dem oberen Filterabschnitt wieder heraus. Dabei wird der obere Filterabschnitt rückgespült. Das dabei entstehende Rückspülwasser fließt durch die Kanäle am unteren Filterabschnitt vorbei und durch die freien Öffnungen im Bodenteil nach unten zum Ablauf.

Jedes Mal, wenn der untere Filterabschnitt durch Öffnen des Ablaufs rückgespült wird, erfolgt vorher eine Rückspülung des oberen Filterabschnitts. Die Federkraft auf das Hubteil ist etwas geringer als die Federkraft auf das Bodenteil. Wenn der Ablauf geöffnet wird, entsteht ein geringer Differenzdruck. Dabei wird aufgrund der geringen Federkraft zunächst das Hubteil nach unten bewegt und öffnet die Kanäle. Wenn der Ablauf vollständig geöffnet wird und der Differenzdruck steigt wird das Hubteil bis in seine untere Endstellung bewegt, wo zwar die Kanäle weiterhin offen sind, aber die Öffnungen im Bodenteil vollständig verschlossen sind. Dadurch wird erreicht, dass der volle Differenzdruck auf das Bodenteil wirkt. Mit dem Bodenteil wird das Filterelement nach unten bewegt und die Rückspülstellung erreicht.

Bei einer bevorzugten Ausgestaltung der Erfindung ist vorgesehen, dass die Anschlussarmatur einen äußeren und einen koaxialen inneren Stutzen aufweist, wobei der Innenbereich des inneren Stutzens mit dem Auslass verbunden ist und der Innenbereich des äußeren Stutzens mit dem Einlass verbunden ist, und der innere Stutzen sich in das koaxial dazu angeordnete Filterelement hinein bis zur Höhe des Ringvorsprungs erstreckt. Die koaxiale Anordnung von Einlass- und Auslassbereich hat den Vorteil, dass eine besonders kompakte Anordnung erreicht wird.

Vorzugsweise weist der Rückspülfilter einen gehäusefesten, zylindrischen und am oberen Ende geschlossenen Aufsatz auf, der mit einem unteren Rand innen in der Filtertasse mündet und im oberen, geschlossenen Bereich eine Öffnung aufweist, durch welche sich der innere Stutzen hindurch erstreckt. Dabei kann das untere Ende des Aufsatzes einen oberen Anschlag für den Ringvorsprung am Filterelement bilden. Statt eines Aufsatzes kann aber auch eine Anordnung verwendet werden, bei der die Wandung an das Gehäuse angeformt ist.

Bei einer weiteren Ausgestaltung der Erfindung ist ein Druckminderer im Inneren des Filterelements angeordnet, dessen Ausgangsseite im inneren Stutzen angeordnet ist. Mit einem Druckminderer wird das Wasser nicht nur gefiltert, sondern auch mit definiertem Druck bereitgestellt. Druckschwankungen, die Auswirkungen auf nachgeschaltete Geräte haben können, werden auf diese Weise an der Verbrauchsstelle vermieden.

Bei einer besonders bevorzugten Ausgestaltung der Erfindung weist das Bodenteil einen Boden für das Filterelement und einen darunter liegenden, parallelen Zwischenboden auf, der sich über den Querschnitt der Filtertasse erstreckt und ein Federwiderlager für eine Feder bildet. Das Bodenteil bildet mit dem Hubteil und dem Filterelement eine axialbewegliche Baugruppe, die zwischen Betriebsstellung und Rückspülstellung beweglich ist.

Das Hubelement kann je einen sich in vertikaler Richtung erstreckenden und einen sich in radialer Richtung erstreckenden Ring oberhalb der Öffnungen im Bodenteil aufweisen, die über Stege miteinander verbunden sind, sowie einen an das obere Ende des vertikalen Rings angeformten Kragen zum Verschließen der Kanäle.

Eine besonders vorteilhafte Ausgestaltung der Erfindung sieht vor, dass das Filterelement mehrere vertikale Streben aufweist und wenigstens ein Teil der Streben zusätzlich mit einem Kanal versehen sind, der über eine Bohrung den Bereich außerhalb des oberen Filterabschnitts mit dem Bereich im Bodenteil verbindet.

Zwischen den Streben können Ringsegmente übereinander angeformt sein, die dicht übereinander liegen und Zwischenräume bilden. Diese Ringsegmente bilden den Filter. Das Wasser strömt dabei durch die Zwischenräume.

Der Ablauf kann im Boden der Filtertasse angeordnet und mit einem Absperrhahn verschließbar sein. Es versteht sich aber, dass ein Kugelhahn hierfür besonders gut geeignet ist, aber auch jede andere Art der Absperrung - manuell oder automatisch betätigt - für diese Verwendung geeignet ist.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist ein Querschnitt durch eine Rückspülfilteranordnung mit einem Filter und einem Hilfsfilter zum Filtern des Rückspülwassers in Betriebsstellung.
- Fig.2: ist ein Querschnitt durch die Anordnung aus Figur 1 entlang einer um einen Winkel um die Längsachse gedrehten Schnittebene.
- Fig.3: ist ein Detail aus Figur 1 in vergrößerter Darstellung
- Fig.4: zeigt das Filterelement aus Figur 1 im Detail.
- Fig.5: ist ein horizontaler Querschnitt entlang der Schnittebene B-B durch die Anordnung aus Figur 1.
- Fig.6: ist eine Explosionsdarstellung der Filterkomponenten der Anordnung aus Figur 1.
- Fig.7: ist eine perspektivische Darstellung eines Aufsatzes für die Anordnung in Figur 1, in welchem die Lage der Rippen illustriert wird.
- Fig.8: entspricht der Darstellung in Figur 1 in Vorspülstellung.
- Fig.9: entspricht der Darstellung in Figur 3 in Vorspülstellung.
- Fig. 10: entspricht der Darstellung in Figur 4 in Vorspülstellung.
- Fig.11: entspricht der Darstellung in Figur 1 in Rückspülstellung.
- Fig.12: entspricht der Darstellung in Figur 3 in Rückspülstellung.
- Fig. 13: entspricht der Darstellung in Figur 4 in Rückspülstellung.

### Beschreibung des Ausführungsbeispiels

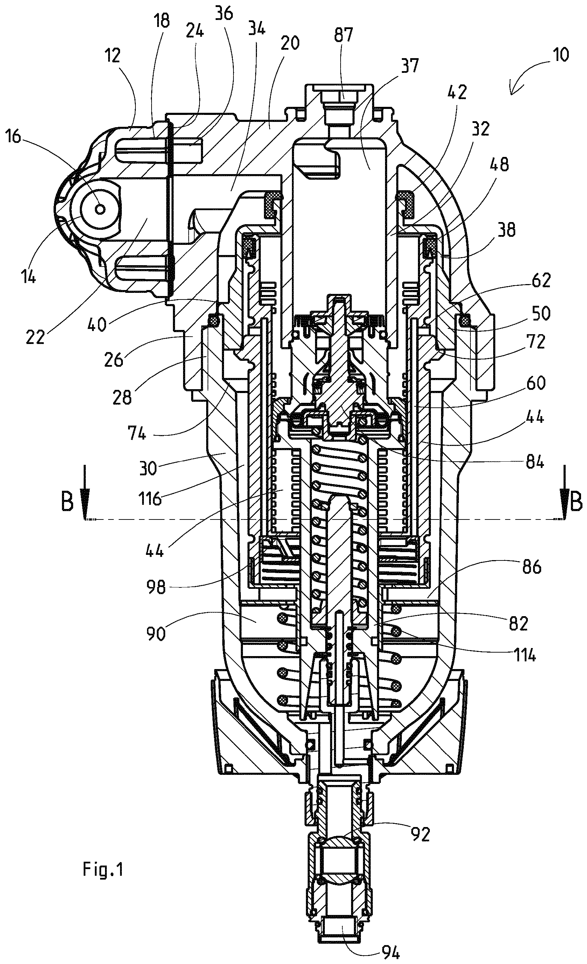

Figur 1 zeigt eine Druckminderer-Filteranordnung, die allgemein mit 10 bezeichnet ist. Die Anordnung 10 dient zum Filtern von Trink- oder Brauchwasser und zum Bereitstellen des gefilterten Wassers mit einem geregelten Ausgangsdruck. Die Anordnung 10 weist eine Anschlussarmatur 12 bekannter Bauart auf. Die Anschlussarmatur 12 hat einen Einlass 14 und einen Auslass 16, mit dem sie in einer Rohrleitung (nicht dargestellt) montiert werden kann. Der Einlass 14 ist mit einem Zentralkanal 22 verbunden. Der Auslass 16 ist mit einem Ringkanal 18 verbunden, der koaxial um den Zentralkanal 22 angeordnet ist. Zentralkanal 22 und Ringkanal 18 münden in einer Flanschverbindung 24, mit der ein Gehäuse 20 mit einem zugehörigen Flansch angeflanscht wird. Es versteht sich, dass das Gehäuse 20 bei einem alternativen Ausführungsbeispiel statt mit einem Flansch 24 auch mit koaxialem Einlass und Auslass direkt in die Rohrleitung eingebaut werden kann.

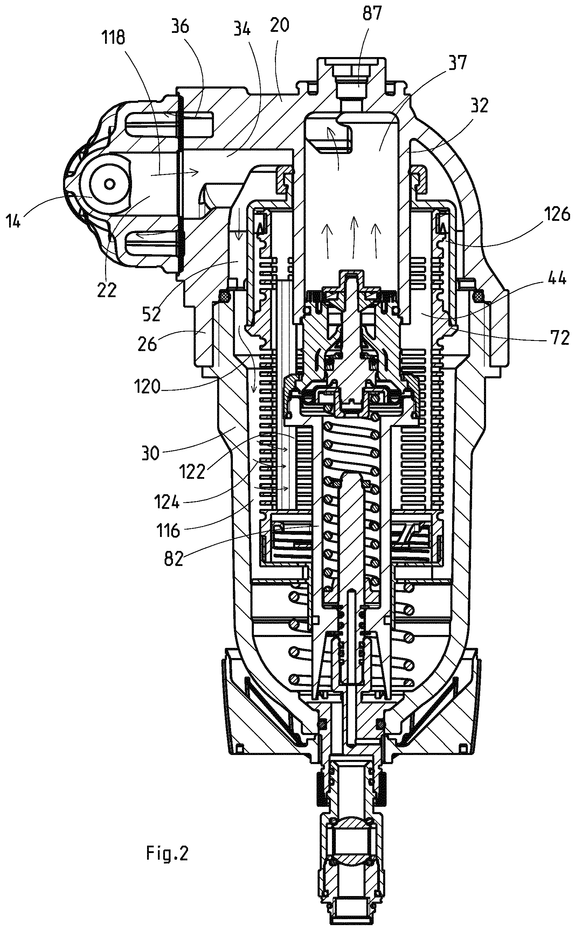

Das Gehäuse 20 weist einen nach unten ragenden äußeren Anschlussstutzen 26 mit einem Innengewinde 28 auf. In das Innengewinde 28 ist eine Filtertasse 30 aus transparentem Kunststoff eingeschraubt. Koaxial zum äußeren Anschlussstutzen 26 bildet das Gehäuse 20 einen inneren Anschlussstutzen 32. Der äußere Anschlussstutzen 26 ist mit dem Zentralkanal 34 im Gehäuse 20 und so mit dem Einlass 14 verbunden. Dies ist in Figur 2 gut zu erkennen. Der Innenraum 37 des inneren Anschlussstutzens 32 ist mit dem Ringkanal 36 im Gehäuse 20 und so mit dem Auslass 16 verbunden.

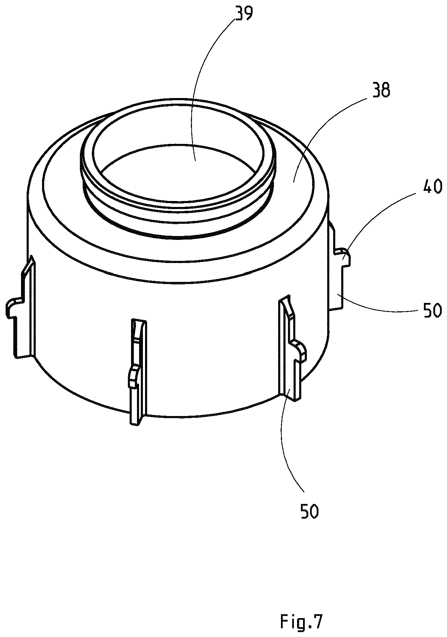

In die Filtertasse 30 ist ein Aufsatz 38 eingesteckt und mit einer Dichtung abgedichtet. Figur 7 zeigt den Aufsatz 38 noch einmal separat. Der innere Anschlussstutzen 32 erstreckt sich durch eine Öffnung 39 des Aufsatzes. Der Aufsatz 38 weist außen im unteren Bereich Rippen 50 mit Vorsprüngen 40 auf, die einen Anschlag bilden, so dass der Aufsatz 38 nur bis zu den Vorsprüngen 40 eingesteckt werden kann. Der untere Teil des Aufsatzes 38 erstreckt sich über den Anschlag hinaus bis in die Filtertasse 30. Der obere Teil des Aufsatzes 38 liegt an der Außenwandung des inneren Anschlussstutzens 32 an und ist mit einem Dichtring 42 abgedichtet. Figur 1 ist ein Längsschnitt durch die Rippen 50, während Figur 2 einen etwas winkelversetzten Längsschnitt zeigt, bei dem die Verbindung 52 vom Zentralkanal 34 zur Filtertasse 30 zwischen den Rippen 50 hindurch erkennbar ist.

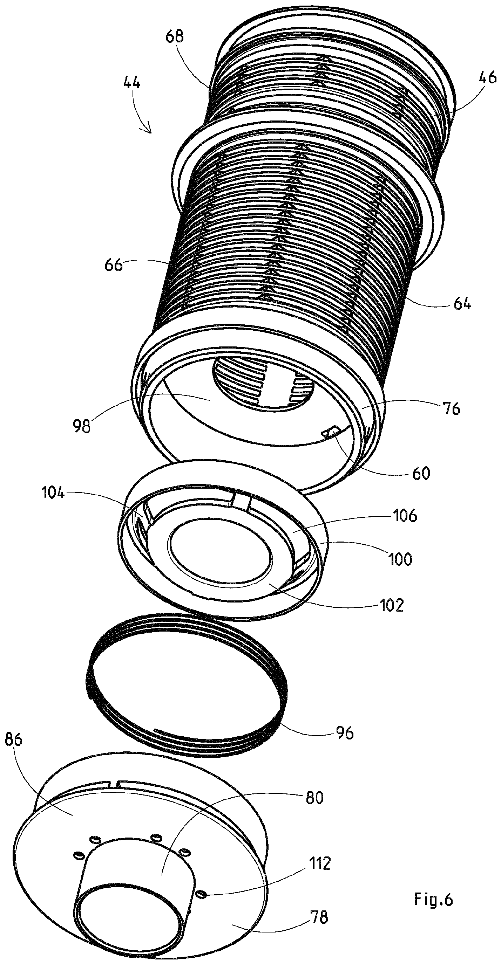

In dem Aufsatz 38 ist ein im Wesentlichen zylindrisches Filterelement 44 aus Kunststoff axialbeweglich geführt. Hierzu weist das Filterelement 44 im oberen Bereich eine Ringaufnahme 46 auf. Die Ringaufnahme 46 ist in der Explosionsdarstellung in Figur 6 gut zu erkennen. In der Ringaufnahme 46 sitzt ein Dichtring 48 mit rechteckigem Querschnitt.

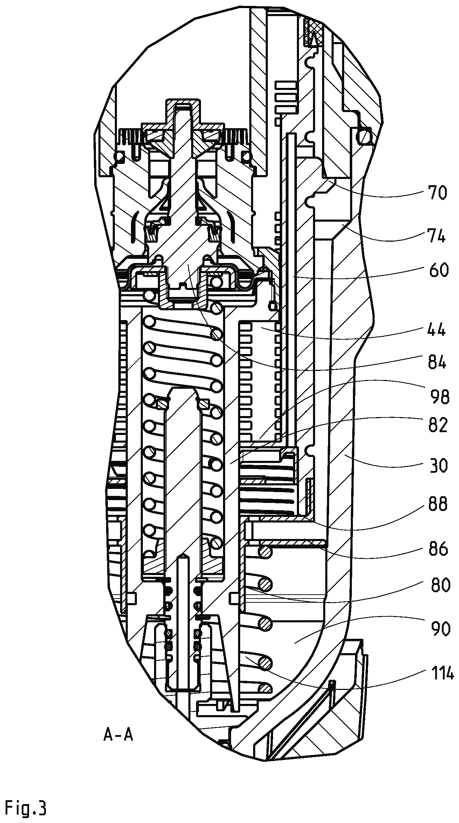

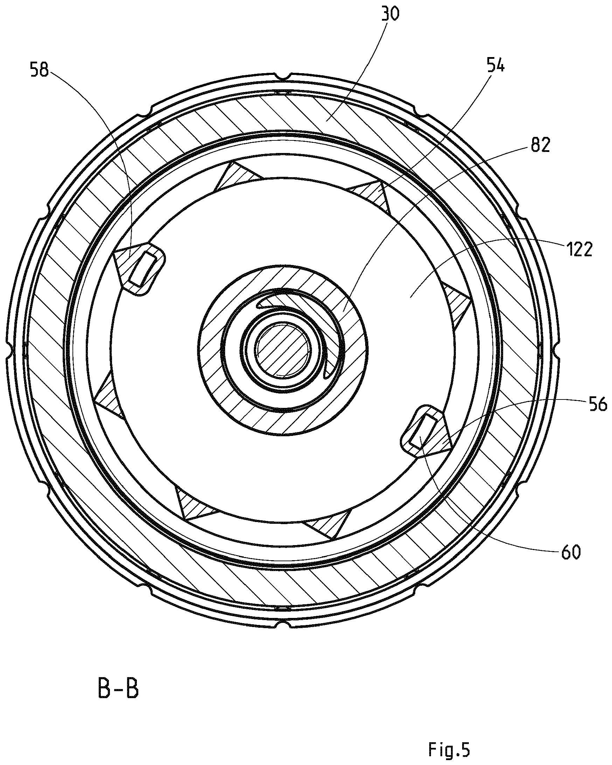

Das Filterelement 44 weist acht vertikale Streben 54 auf. Sechs der Streben 54 haben einen dreieckigen Querschnitt, wie dies im Querschnitt in Figur 5 gut zu erkennen ist. Zwei gegenüberliegende Streben, nämlich die Streben 56 und 58, haben ebenfalls einen dreieckigen Querschnitt. An diesen beiden Streben 56 und 58 ist innen zur Längsachse hin zusätzlich ein Kanal 60 angeformt. Der Kanal 60 erstreckt sich über große Teile der Länge des Filterelements 44, wie in Figur 1 und Figur 3 gut zu erkennen ist. Kurz unter dem oberen Ende des Kanals 60 ist eine Bohrung 62 vorgesehen, über welche der Kanal 60 mit dem Bereich außerhalb des Filterelements verbunden ist. Die Kanäle 60 sind nach unten offen.

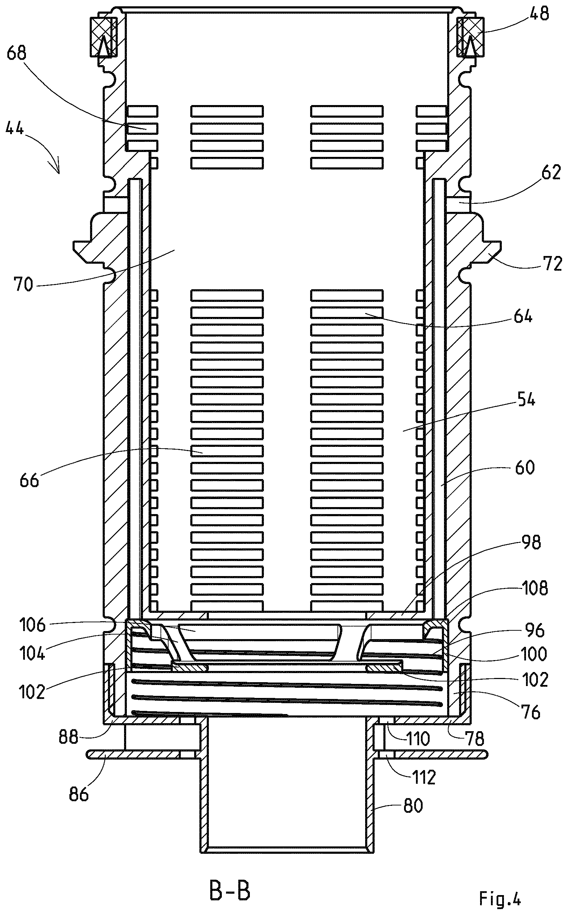

Zwischen den Streben 54 sind Ringsegmente 64 übereinander angeformt. Die Ringsegmente 64 liegen dicht übereinander und bilden kleine Zwischenräume. Zusammen mit den Streben 54 halten die Ringsegmente 64 Schmutzpartikel im Wasser zurück, während das Wasser durch die Zwischenräume fließen kann. Das Filterelement 44 weist in axialer Richtung zwei Filterabschnitte mit Ringsegmenten 64 auf: einen unteren, größeren Filterabschnitt 66 und einen oberen, kleineren Filterabschnitt 68. Dies ist in Figur 4 und 6 gut zu erkennen. Zwischen den Filterabschnitten 66 und 68 ist ein Bereich 70 ohne Zwischenräume. In dem Bereich 70 ist außen ein Ringvorsprung 72 angeformt. Das untere Ende des Aufsatzes 50 bildet einen Anschlag, der die Bewegung des Filterelements 44 nach oben begrenzt, wenn der Ringvorsprung 72 auf das untere Ende des Aufsatzes 50 trifft. Diese Situation ist in Figur 1 und 3 dargestellt.

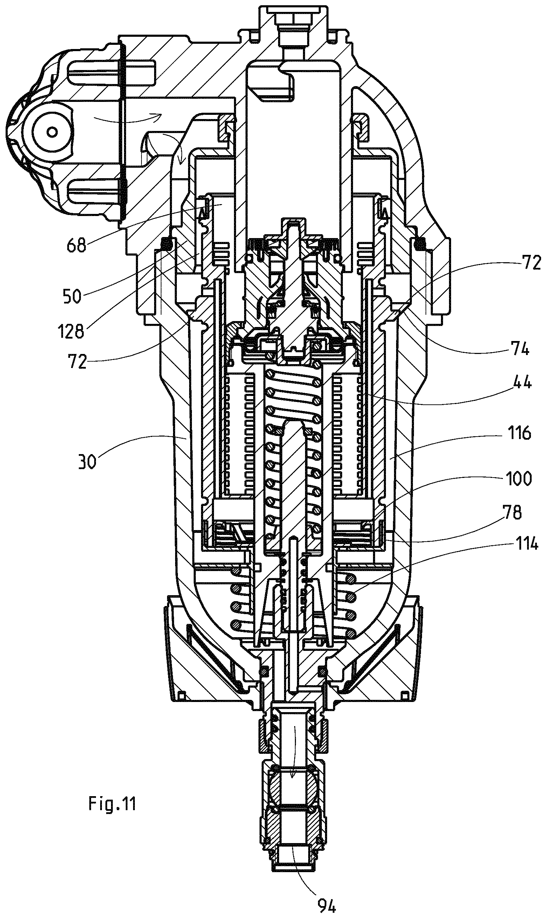

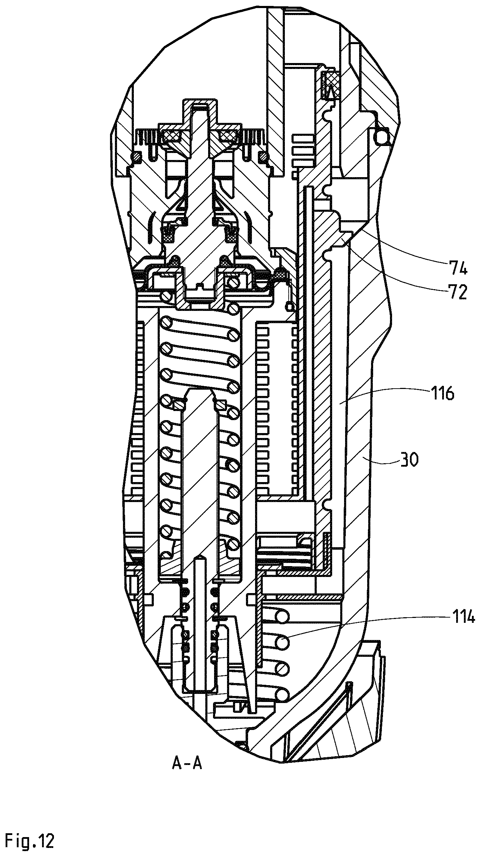

Die Filtertasse 30 weist auf der Innenwandung eine Schulter 74 auf. Die Schulter 74 bildet ebenfalls einen Anschlag. Die Bewegung des Filterelements 44 nach unten wird durch die Schulter 74 begrenzt, wenn dort der Ringvorsprung 72 auftrifft. Diese Situation ist in Figur 11 und 12 dargestellt.

Das untere Ende 76 des Filterelements 44 weist eine verringerte Wandstärke auf. Mit diesem Ende 76 ist das Filterelement 44 in einem Bodenteil 78. Das Bodenteil ist in Figur 4 und 6 gut zu erkennen. Das Bodenteil 78 schließt das Filterelement 44 nach unten ab. Im Mittenbereich des Bodenteils 78 ist ein Rohrstück 80 angeformt, dass sich nach unten erstreckt. Durch das Rohrstück 80 erstreckt sich eine gehäusefeste Hülse 82, in der ein Druckminderer 84 angeordnet werden kann. Das eigentliche Druckmindererventil sitzt im unteren Bereich des inneren Stutzens 32. Das dargestellte Ausführungsbeispiel ist mit einem Druckminderer 84 bekannter Bauart versehen. Er braucht daher hier nicht im Detail beschrieben werden. Ein alternatives Ausführungsbeispiel verwendet keinen Druckminderer. Der Ausgangsdruck kann an einer mit einem Stopfen verschließbaren Öffnung 87 mit einem Manometer gemessen werden.

Unterhalb des Bodens 88 weist das Bodenteil 78 einen weiteren, zum Boden beabstandeten Zwischenboden 86 auf, der sich von der Außenseite des Rohrstücks 80 bis zur Innenwandung der Filtertasse 30 erstreckt. Der Zwischenboden 86 trennt den Bodenraum 90 vom übrigen Innenraum der Filtertasse 30. Dies ist in Figur 1 zu erkennen. Am unteren Ende des Bodenraums 90 weist die Filtertasse 30 einen mit einem Kugelhahn 92 verschließbaren Ablauf 94 auf. Figur 1 zeigt die Situation mit vollständig geschlossenem Kugelhahn 92. Das ist die Betriebsstellung.

In dem Bodenteil 78 sitzt eine schwache Feder 96. Die Feder 96 stützt sich auf der Oberseite des Bodens 88 ab. Das Filterelement 44 bildet kurz vor dem unteren Ende 76 einen nach innen ragenden Rand 98. In den unteren Bereich 76 des Filterelements 44 ist ein Ring 100 bis zum Rand 98 eingesetzt. Der Ring 100 erstreckt sich in achsialer Richtung, wie in Figur 4 zu erkennen ist. Der Ring 100 weist einen konzentrischen, sich in radialer Richtung erstreckenden Innenring 102 auf , der über Stege 104 mit dem Ring 100 verbunden ist. Zwischen den Stegen 104 sind Öffnungen 106 gebildet.

Im oberen Bereich bildet der Ring 100 einen nach innen gekrümmten Kragen 108. Der Kragen bildet das Federwiderlager für die Feder 96. In Figur 4 ist gut zu erkennen, dass die Feder den Ring 100 nach oben gegen den Rand 98 drückt. Die Oberseite des Kragens 108 liegt genau im Bereich der Kanäle 60. Wenn also der Ring 100 in der in Figur 4 dargestellten, oberen Position angeordnet ist, sind die Kanäle 60 nach unten mit dem Kragen 108 verschlossen. Der Bereich zwischen Rand 98 und Boden 88 ist über Bohrungen 110 im Boden 88 und Bohrungen 112 im Zwischenboden 86 mit dem Bereich 90 am Boden der Filtertasse verbunden. Eine Feder 114 im Bereich 90 ist am Boden der Filtertasse 30 abgestützt und drückt auf die Unterseite des Zwischenbodens 86. Auf diese Weise wird die gesamte Baugruppe aus Bodenteil 78, Ring 100 und Filterelement 44 bis zum Anschlag nach oben gedrückt. Am Anschlag treffen die Vorsprünge 40 auf das untere Ende des Aufsatzes 50. Diese Situation ist in Figur 1 dargestellt. Die Feder 114 ist stärker als die Feder 96. Entsprechend wird bei einer nach unten wirkenden Kraft zunächst der Ring 100 nach unten bewegt und dann erst die Baugruppe mit dem Filterelement 44.

Anhand von Figur 2 wird im folgenden erläutert, wie das Wasser in der in den Figuren 1 bis 3 gezeigten Betriebsstellung durch die Armatur fließt:
Vom Einlass 14 gelangt das Wasser durch den Zentralkanal 22 über den Flansch 24 in den Zentralkanal 34 im Gehäuse 20. Der Zentralkanal 34 ist über eine Verbindung 52 mit dem Innenraum der Filtertasse 30 verbunden. Im Innenraum der Filtertasse 30 sitzt das Filterelement 44. Zwischen Filtertasse 30 und Filterelement 44 ist ein äußerer Ringraum 116 gebildet. Das Wasser fließt also zunächst in den Ringraum 116 in Richtung der Pfeile 118 und 120. Vom Ringraum 116 fließt das Wasser in einen inneren Ringraum 122, der zwischen dem Filterelement 44 und der Hülse 82 gebildet ist. Dabei fließt das Wasser von außen nach innen durch den unteren Filterabschnitt 66 des Filterelements 44. Dies ist durch Pfeile 124 repräsentiert. Schmutzpartikel bleiben im unteren Filterabschnitt 66 außen am Filterelement 44 hängen. Das gefilterte Wasser fließt im Innenraum nach oben und durch ein ggf. vorhandenes Druckmindererventil eines Druckminderers 84. Hinter dem Druckminderer 84 im Bereich 37 ist das Wasser gereinigt und hat einen definierten Ausgangsdruck. Es fließt dann durch den Ringkanal 36 und 18 zum Auslass 16. Dort steht es zur weiteren Verwendung zur Verfügung.

In der in Figur 1 bis 3 dargestellten Betriebsstellung drückt die Feder 114 die gesamte Gruppe mit dem Filterelement 44 nach oben. Es kann kein Wasser in den Bereich 126 oberhalb des Ringvorsprungs 72 fließen. Die Feder 96 drückt den Ring 100 mit dem Kragen 108 nach oben. Die Kanäle 60 sind vom Kragen nach unten hin verschlossen, so dass kein Wasser durch die Kanäle 60 strömt.

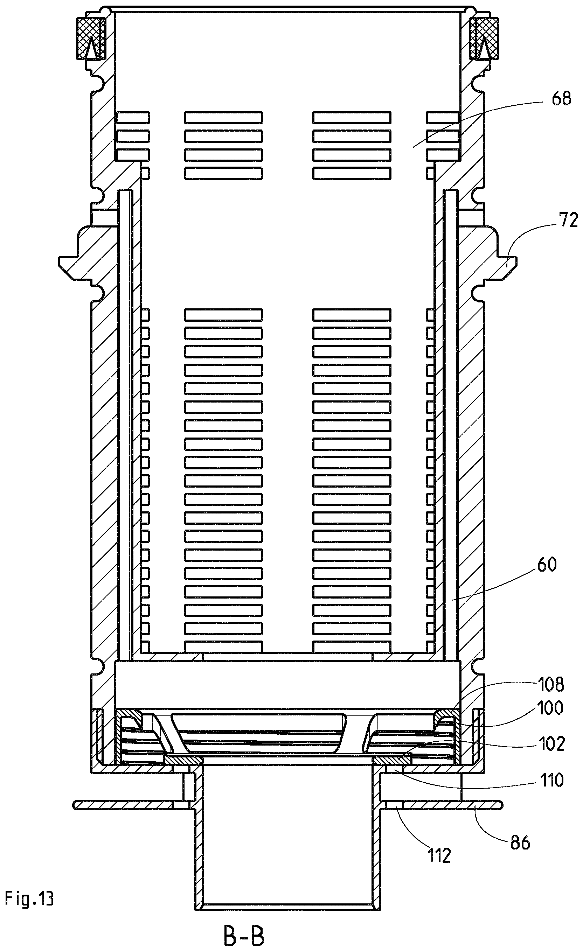

Mit der Zeit setzt sich der Filter mit Schmutzpartikeln zu. Dann muss der Filter rückgespült werden. Zu diesem Zweck wird der Kugelhahn 92 geöffnet. Die Rückspülstellung ist in den Figuren 11 bis 13 dargestellt.

Wenn der Kugelhahn 92 geöffnet wird, fließt Wasser nach unten ab. Dadurch entsteht ein Differenzdruck mit einer nach unten wirkenden Kraft auf die Baugruppe aus Bodenteil 78, Ring 100 und Filterelement 44 entgegen der Federkraft der Feder 114. Die Baugruppe wird vollständig nach unten gezogen bis der Ringvorsprung 72 auf die Schulter 74 auf der Innenwandung der Filtertasse 30 anschlägt. In dieser Rückspülstellung wird die Strömung in den äußeren Ringraum 116 durch den Ringvorsprung 72 blockiert. Stattdessen fließt Wasser zwischen den Rippen 50 des Aufsatzes 38 hindurch durch einen Bereich 128 zum oberen Filterabschnitt 68. Das Wasser strömt durch den oberen Filterabschnitt 68 in den Innenraum des Filterelements 44 und von dort seitlich an der Hülse 82 vorbei nach unten. Gleichzeitig fließt wasser durch die seitliche Bohrung 62 in die Kanäle 60. Auch dort fließt das Wasser nach unten.

Die durch den Differenzdruck verursachte Kraft wirkt auch auf den Ring 100 mit dem Kragen 108. Dieser wird nach unten bewegt und gibt die Öffnung am unteren Ende der Kanäle 60 frei. Gleichzeitig verschließt der Ring 102 die Öffnungen 110. Der innere Teil des Filterelements ist nach unten vollständig geschlossen. Entsprechend fließt das gesamte Wasser in umgekehrter Richtung von innen nach außen durch den unteren Filterabschnitt 66 in den äußeren Ringraum. Dabei werden außen am Filterelement 44 haftende Schmutzpartikel mitgerissen. Der Filter wird auf diese Weise rückgespült. Das Wasser kann durch den äußeren Ringraum 116 am Ring 100 vorbei nach unten fließen. Durch die Öffnungen 112 im Zwischenboden 86 strömt das Rückspülwasser mit den Schmutzpartikeln zum geöffneten Ablauf 94.

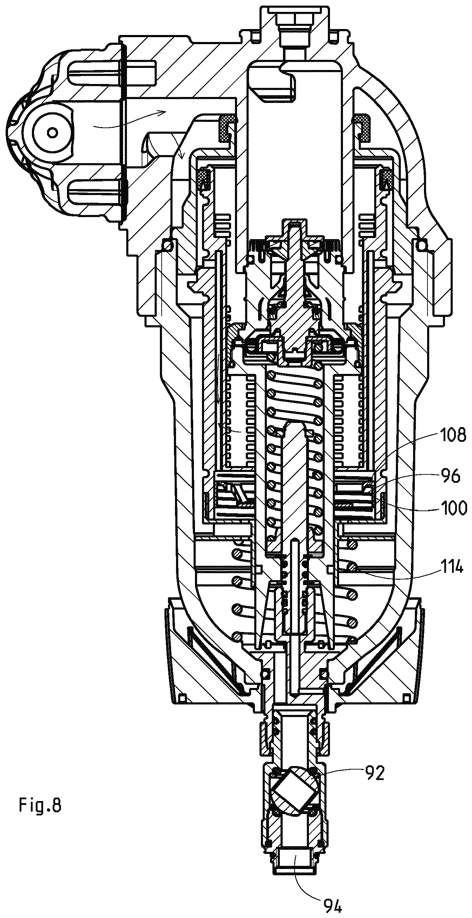

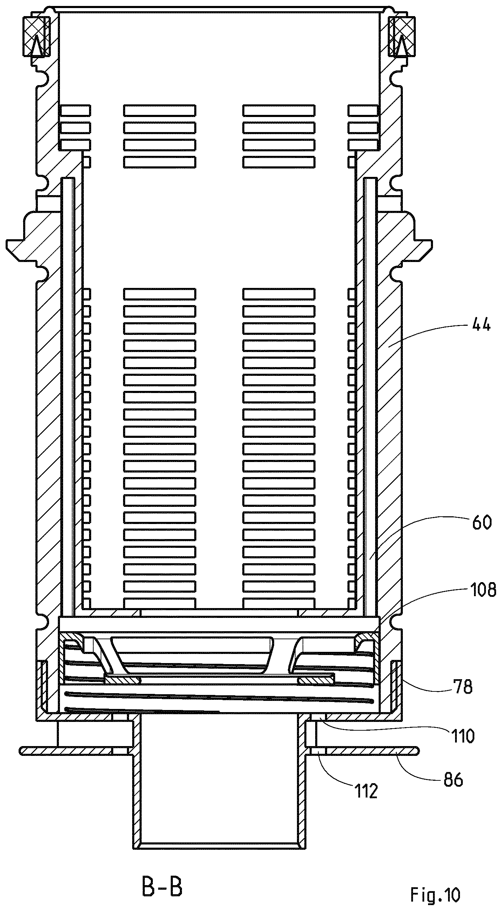

Durch den oberen Filterabschnitt 68 wird das Rückspülwasser ebenfalls gefiltert. Es können keine Schmutzpartikel in den Innenraum des Filterelements 44 gelangen. Mit der Zeit setzt sich aber auch dieser Filterabschnitt 68 zu. Es ist daher vorgesehen, dass der obere Filterabschnitt ebenfalls gereinigt wird. Dies wird durch eine Zwischenstellung erreicht, die in den Figuren 8 bis 10 dargestellt ist.

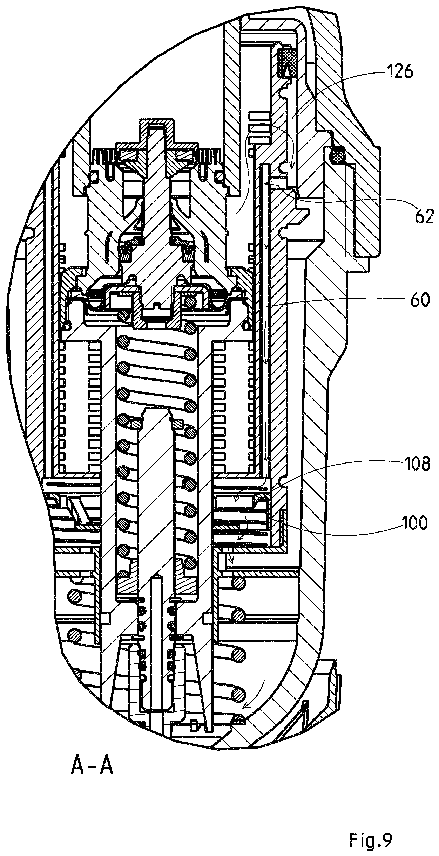

Die Zwischenstellung wird erreicht, wenn der Kugelhahn 92 nur leicht geöffnet wird. Dabei fließt nur wenig Wasser nach unten ab und es wird nur ein geringer Differenzdruck erzeugt. Die Federkraft der Federn 114 und 96 ist gerade so gewählt, dass der geringe Differenzdruck ausreicht um den Ring 100 mit dem Kragen 108 nach unten zu bewegen, aber nicht so groß ist, dass sich auch die Baugruppe aus Bodenteil 78, Ring 100 und Filterelement 44 vollständig nach unten bewegt. Diese Baugruppe nimmt vielmehr eine Zwischenposition ein. In dieser Zwischenposition sind die Öffnungen 110 offen. Auch die Kanäle 60 sind nach unten geöffnet. Dies ist in Figur 9 gut zu erkennen.

Das Wasser fließt in Richtung der Pfeile 130 und 132 zunächst in den äußeren Ringraum 116. Vom äußeren Ringraum durch den unteren Filterabschnitt 66 in den inneren Ringraum 122. Dabei bleiben Schmutzpartikel außen am Filterelement 44 hängen. Im Inneren des Filterelements 44 fließt das Wasser zwischen den Streben 54 nach oben und durch den oberen Filterabschnitt 68 von innen nach außen. Dabei werden Schmutzpartikel abgelöst, die sich außen auf dem oberen Filterabschnitt 68 während des Rückspülens abgesetzt haben. Mit anderen Worten: der beim Rückspülen wirksame obere Filterabschnitt 68 wird in der Zwischenstellung ebenfalls rückgespült und so gereinigt. Da die Zwischenstellung immer zumindest kurzzeitig eingenommen wird, wenn eine Rückspülung vorgenommen wird, wird auch der obere Filterabschnitt 68 regelmäßig gereinigt.

Das Rückspülwasser, das durch den oberen Filterabschnitt 68 geströmt ist, gelangt in den Bereich 126 innerhalb des Aufsatzes 38. Dieser Bereich 126 ist über Bohrungen 62 mit den Kanälen 60 verbunden. Auf diese Weise gelangt das Rückspülwasser durch die Bohrung 62 in die Kanäle 60. Die Kanäle sind in der Zwischenstellung, wie in Figur 9 dargestellt, unten offen. Das Wasser fließt also an dem Kragen 108 vorbei durch den Innenraum des Rings 100 zu den Bohrungen 110 und 112. Durch die in diesem Zustand offenen Bohrungen 110 und 112 fließt das Wasser durch den Bodenbereich 90 der Filtertasse 30 zum Ablauf 92.

Die Abfolge bei einer Rückspülung ist also: aus der in Figur 1 bis 4 gezeigten Betriebsstellung wird bei Öffnen des Kugelhahns 92 zunächst der Kragen nach unten bewegt. Dabei öffnen die Kanäle 60 und der obere Filterabschnitt wird rückgespült. Bei weiterem Öffnen des Kugelhahns wird die Öffnung 110 verschlossen und der untere Filterabschnitt 66 rückgespült.

Die beschriebene Anordnung hat den Vorteil, dass der obere Filterabschnitt 68, mit dem das Wasser vor der Verwendung für die Rückspülung des unteren Filterabschnitts 66 gefiltert wird, ebenfalls rückgespült wird. Diese Rückspülung erfolgt jedesmal, wenn der Kugelhahn für die Rückspülung des unteren Filterabschnitts 66 geöffnet wird. Dadurch, dass die Öffnung 110 bei Erreichen der Rückspülstellung verschlossen wird, wird aber gleichzeitig erreicht, dass der volle Differenzdruck für die Bewegung der Baugruppe mit dem Filterelement 44 und für die Rückspülung zur Verfügung steht. Kragen 108 und Ring 102 wirken folglich wie ein Doppelventil zum Verschließen und Öffnen der Kanäle 60 und der Öffnung 110 nach unten.

## Patentansprüche

1. Rückspülfilter zum Filtern von Trink- oder Brauchwasser, welcher von einer Betriebsstellung, bei welcher Wasser vom Einlass durch den Filter zum Auslass geleitet wird, zum Rückspülen in eine Rückspülstellung umschaltbar ist, bei welcher Wasser vom Einlass in umgekehrter Richtung durch den Filter zum Ablauf leitbar ist, enthaltend:
(a) eine Anschlussarmatur mit einem Einlass (14) und einem Auslass (16);
(b) eine Filtertasse (30) mit einem verschließbaren Ablauf (94);
(c) ein zwischen einem oberen und einem unteren Anschlag axialbeweglich geführtes Filterelement (44) mit einem oberen Filterabschnitt (68) und einem unteren Filterabschnitt (66), welches derart in der Filtertasse (30) angeordnet ist, dass ein mit dem Einlass verbindbarer äußerer Ringraum (116) zwischen dem unteren Filterabschnitt (66) und der Filtertasse (30) gebildet ist;
(d) einen Ringvorsprung (72) aussen auf dem Filterelement (44) zwischen dem oberen Filterabschnitt (68) und dem unteren Filterabschnitt (66) zum Trennen des äußeren Ringraums (116) vom Bereich außerhalb des oberen Filterabschnitts (68), wobei der Ringvorsprung mit einer Schulter auf der Innenwandung der Filtertasse derart zusammenwirkt, dass
(i) die Verbindung vom Einlass zum äußeren Ringraum (116) in einer oberen Stellung des Filterelements (44) geöffnet ist und in einer unteren Stellung des Filterelements blockiert ist;
(ii) die Verbindung vom Einlass zum Bereich (126) außen um den oberen Filterabschnitt (68) in der oberen Stellung des Filterelements (44) blockiert ist und der unteren Stellung des Filterelements (44) geöffnet ist; und
(iii) die Verbindung vom Einlass zum äußeren Ringraum (116) in einer Zwischenstellung des Filterelements (44) geöffnet ist, während die Verbindung vom Einlass zum Bereich (126) außen um den oberen Filterabschnitt (68) blockiert ist;
(e) einen oder mehrere Kanäle (60, 62) zum Verbinden des Bereichs (126) außen um den oberen Filterabschnitt (68) mit dem Bereich unterhalb des unteren Filterabschnitts (66);
(f) ein Federkraft-beaufschlagtes Bodenteil (78) zum Verschließen des Filterelements (44) am unteren Ende mit Öffnungen (110; 112) zum Verbinden des Innenraums des Filterelements (44) mit dem mit dem Ablauf (94) verbundenen Bodenbereich (90) der Filtertasse (30); und
(g) ein in dem Bodenteil (78) axialverschieblich geführtes, Federkraft-beaufschlagtes Hubelement (100,102, 108), welches in einer ersten Endstellung die Kanäle (60) und in einer zweiten Endstellung die Öffnungen (110) im Bodenteil (78) verschließt, wobei die auf das Bodenteil (78) wirkende Federkraft größer ist, als die auf das Hubelement wirkende Federkraft.

2. Rückspülfilter nach Anspruch 1, **dadurch gekennzeichnet, dass** die Anschlussarmatur (20) einen äußeren (26) und einen koaxialen inneren Stutzen (32) aufweist, wobei der Innenbereich (37) des inneren Stutzens (32) mit dem Auslass (16) verbunden ist und der Innenbereich des äußeren Stutzens (26) mit dem Einlass (14) verbunden ist, und der innere Stutzen (26) sich in das koaxial dazu angeordnete Filterelement (44) hinein bis zur Höhe des Ringvorsprungs (72) erstreckt.

3. Rückspülfilter nach Anspruch 2, **gekennzeichnet durch** einen gehäusefesten, zylindrischen und am oberen Ende geschlossenen Aufsatz (38), der mit einem unteren Rand innen in der Filtertasse (30) mündet und im oberen, geschlossenen Bereich eine Öffnung aufweist, durch welche sich der innere Stutzen (26) hindurch erstreckt.

4. Rückspülfilter nach Anspruch 3, **dadurch gekennzeichnet, dass** das untere Ende (50) des Aufsatzes einen oberen Anschlag für den Ringvorsprung (72) am Filterelement (44) bildet.

5. Rückspülfilter nach einem der vorgehenden Ansprüche, **dadurch gekennzeichnet, dass** ein Druckminderer (84) im Inneren des Filterelements (44) angeordnet ist, dessen Ausgangsseite im inneren Stutzen (26) angeordnet ist.

6. Rückspülfilter nach einem der vorgehenden Ansprüche, **dadurch gekennzeichnet, dass** das Bodenteil (78) einen Boden (88) für das Filterelement (44) und einen darunter liegenden, parallelen Zwischenboden (86) aufweist, der sich über den Querschnitt der Filtertasse (30) erstreckt und ein Federwiderlager für eine Feder (114) bildet.

7. Rückspülfilter nach einem der vorgehenden Ansprüche, **dadurch gekennzeichnet, dass** das Hubelement je einen sich in vertikaler Richtung erstreckenden und einen sich in radialer Richtung erstreckenden Ring (100, 102) oberhalb der Öffnungen (110) im Bodenteil (78) aufweist, die über Stege miteinander verbunden sind, sowie einen an das obere Ende des vertikalen Rings angeformten Kragen zum Verschließen der Kanäle (60).

8. Rückspülfilter nach einem der vorgehenden Ansprüche, **dadurch gekennzeichnet, dass** das Filterelement (44) mehrere vertikale Streben (54) aufweist und wenigstens ein Teil der Streben (54) zusätzlich mit einem Kanal (60) versehen sind, der über eine Bohrung (62) den Bereich (126) außerhalb des oberen Filterabschnitts (68) mit dem Bereich im Bodenteil (78) verbindet.

9. Rückspülfilter nach Anspruch 8, **dadurch gekennzeichnet, dass** zwischen den Streben (54) Ringsegmente (64) übereinander angeformt sind, die dicht übereinander liegen und Zwischenräume bilden.

10. Rückspülfilter nach einem der vorgehenden Ansprüche, **dadurch gekennzeichnet, dass** der Ablauf (94) im Boden der Filtertasse (30) angeordnet und mit einem Absperrhahn (92) verschließbar ist.

## Claims

1. Backflow filter for filtering drinking or use water, which is adapted to be switched between an operating position where water flows from an inlet through the filter to an outlet and a backflow position for backflushing where water flows from the inlet in the opposite direction through the filter to a drain, comprising:
(a) a connection fitting with an inlet (14) and an outlet (16);
(b) a filter cup (30) with a closable drain (94);
(c) a filter element (44) which is axially moveably guided between an upper and a lower stop, with an upper filter section (68) and a lower filter section (66), which is accommodated in the filter cup (30) in such a way, that an outer annular space (116) adapted to be connected to the inlet is formed between the lower filter section (66) and the filter cup (30);
(d) an annular projection (72) on the outside of the filter element (44) between the upper filter section (68) and the lower filter section (66) for separating the outer annular space (116) from the range outside the upper filter section (68), wherein the annular projection cooperates with a shoulder on the inside of the filter cup in such a way that
(i) the connection between the inlet and the outer annular space (116) is open in an upper position of the filter element (44) and blocked in a lower position of the filter element;
(ii) the connection between the inlet and the range (126) outside the upper filter section (68) is blocked in the upper position of the filter element (44) and open in the lower position of the filter element (44); and
(iii) the connection between the inlet to the outer annular space (116) is open in an intermediate position of the filter element (44) while the connection from the inlet to the range (126) outside the upper filter section (68) is blocked;
(e) one or more passages (60, 62) for connecting the range (126) outside around the upper filter section (68) to the range below the lower filter section (66);
(f) a bottom portion (78) biased by the force of a spring for closing the filter element (44) at the lower end with openings (110; 112) for connecting the inside of the filter element (44) to the drain (94) connected to the bottom space (90) of the filter cup (30); and
(g) a lifting element (100,102, 108) biased by the force of a spring axially moveably guided in the bottom portion (78), the lifting element closing the passages (60) in a first end position and the openings (110) in the bottom portion (78) in a second end position, wherein the spring power exerted on the bottom portion (78) is larger than the spring power exerted on the lifting element.

2. Backflow filter according to claim 1, **characterized in that** the connection fitting (20) is provided with an outer (26) and a coaxial inner socket (32), wherein the inner range (37) of the inner socket (32) is connected to the outlet (16) and the inner range of the outer socket (26) is connected to the inlet (14), and the inner socket (26) coaxially extends into the filter element (44) up to the height of the annular projection (72).

3. Backflow filter according to claim 2, **characterized by** a cylindrical top part (38) which is closed at its upper end and fixed to the housing, the top part extending into the filter cup (30) with a lower rim and being provided with an opening in the upper closed range the inner socket (26) extending therethrough.

4. Backflow filter according to claim 3, **characterized in that** the lower end (50) of the top part forms an upper stop for the annular projection (72) at the filter element (44).

5. Backflow filter according to any of the preceding claims, **characterized in that** a pressure reducer (84) is provided inside the filter element (44) having its outlet side arranged in the inner socket (26).

6. Backflow filter according to any of the preceding claims, **characterized in that** the bottom portion (78) is provided with a bottom (88) for the filter element (44) and a parallel intermediate bottom (86) therebelow, extending along the cross section of the filter cup (30) and forming a spring abutment for a spring (114).

7. Backflow filter according to any of the preceding claims, **characterized in that** each lifting element is provided with a ring (100, 102) extending in a vertical direction and in a radial direction above the openings (110) in the bottom part (78), connected by webs and a collar integrated at the upper end of the vertical ring for closing the passages (60).

8. Backflow filter according to any of the preceding claims, **characterized in that** the filter element (44) is provided with several vertical webs (54) and at least a portion of the webs (54) is additionally provided with a passage (60) connecting the range (126) outside des upper filter section (68) through the bore hole (62) to the range in the bottom part (78).

9. Backflow filter according to claim 8, **characterized in that** annular segments (64) are integrated one above the other between the webs (54), which are positioned closely to one another and form intermediate spaces.

10. Backflow filter according to any of the preceding claims, **characterized in that** der drain (94) is provided in the bottom of the filter cup (30) and adapted to be closed by a shut-off valve (92).

## Revendications

1. Filtre de lavage à contre-courant destiné à filtrer de l'eau potable ou de l'eau industrielle qui, pour laver à contre-courant, peut être commuté d'une position de service dans laquelle de l'eau est guidée à travers le filtre depuis l'entrée jusqu'à la sortie dans une position de lavage à contre-courant dans laquelle de l'eau peut être guidée en sens inverse à travers le filtre depuis l'entrée jusqu'à la sortie, comprenant
(a) une pièce de robinetterie de raccordement munie d'une entrée (14) et d'une sortie (16) ;
(b) une tasse de filtre (30) munie d'un déversoir (94) pouvant être fermé ;
(c) un élément de filtre (44) guidé entre une butée supérieure et une butée inférieure de sorte à pouvoir se déplacer axialement et muni d'une section de filtre supérieure (68) et d'une section de filtre inférieure (66), qui est disposé dans la tasse de filtre (30) de sorte qu'il se forme entre la section de filtre inférieure (66) et la tasse de filtre (30) un espace annulaire (116) extérieur pouvant être connecté à l'entrée ;
(d) une saillie annulaire (72) située à l'extérieur sur l'élément de filtre (44) entre la section de filtre supérieure (68) et la section de filtre inférieure (66) et destinée à séparer l'espace annulaire extérieur (116) de la zone située à l'extérieur de la section de filtre supérieure (68), la saillie annulaire concourant avec un épaulement situé sur la paroi intérieure de la tasse de filtre de sorte que
(i) la connexion allant de l'entrée jusqu'à l'espace annulaire extérieur (116) est ouverte quand l'élément de filtre (44) est en position supérieure et bloquée quand l'élément de filtre est en position inférieure ;
(ii) la connexion allant de l'entrée jusqu'à la zone (126) située à l'extérieur autour de la section de filtre supérieure (68) est bloquée quand l'élément de filtre (44) est en position supérieure et ouverte quand l'élément de filtre (44) est en position inférieure ; et
(iii) la connexion allant de l'entrée jusqu'à l'espace annulaire extérieur (116) est ouverte quand l'élément de filtre (44) est en position intermédiaire tandis que la connexion allant de l'entrée jusqu'à la zone (126) située à l'extérieur autour de la section de filtre supérieure (68) est bloquée ;
(e) un ou plusieurs canaux (60, 62) destinés à connecter la zone (126) située à l'extérieur autour de la section de filtre supérieure (68) à la zone située en dessous de la section de filtre inférieure (66) ;
(f) un élément de fond (78) sollicité par la force d'un ressort et destiné à fermer l'élément de filtre (44) à l'extrémité inférieure et muni d'orifices (110 ; 112) destinés à connecter l'espace intérieur de l'élément de filtre (44) à la zone du fond (90) de la tasse de filtre (30) reliée au déversoir (94) ; et
(g) un élément de levage (100, 102, 108) sollicité par la force d'un ressort et guidé dans l'élément de fond (78) de sorte à pouvoir se déplacer axialement, qui ferme dans une première position fin de course les canaux (60) et dans une seconde position fin de course les orifices (110) dans l'élément de fond (78), la force du ressort agissant sur l'élément de fond (78) étant supérieure à la force du ressort agissant sur l'élément de levage.

2. Filtre de lavage à contre-courant selon la revendication 1, **caractérisé en ce que** la pièce de robinetterie (20) présente un manchon de raccordement extérieur (26) et un manchon de raccordement intérieur (32) coaxial, la zone intérieure (37) du manchon de raccordement intérieur (32) étant reliée à la sortie (16) et la zone intérieure du manchon de raccordement extérieur (26) étant reliée à l'entrée (14), et le manchon de raccordement intérieur (26) s'étire à l'intérieur de l'élément de filtre (44) disposé sur le même axe que celui-ci jusqu'à hauteur de la saillie annulaire (72).

3. Filtre de lavage à contre-courant selon la revendication 2, **caractérisé par** un chapeau (38) cylindrique et fixe par rapport au boîtier, fermé à l'extrémité supérieure, qui débouche dans la tasse de filtre (30) avec un bord inférieur et présente dans la zone supérieure fermée un orifice traversé par le manchon de raccordement intérieur (26) .

4. Filtre de lavage à contre-courant selon la revendication 3, **caractérisé en ce que** l'extrémité inférieure (50) du chapeau forme une butée supérieure pour la saillie annulaire (72) située sur l'élément de filtre (44).

5. Filtre de lavage à contre-courant selon l'une quelconque des revendications précédentes, **caractérisé en ce qu'**un réducteur de pression (84) dont la face de sortie est disposée dans le manchon de raccordement intérieur (26) est disposé à l'intérieur de l'élément de filtre (44).

6. Filtre de lavage à contre-courant selon l'une quelconque des revendications précédentes, **caractérisé en ce que** l'élément de fond (78) présente un fond (88) pour l'élément de filtre (44) et un fond intermédiaire (86) parallèle situé en dessous qui s'étire sur la section transversale de la tasse de filtre (30) et forme une butée de ressort pour un ressort (114).

7. Filtre de lavage à contre-courant selon l'une quelconque des revendications précédentes, **caractérisé en ce que** chaque élément de levage présente, dans l'élément de fond (78) au-dessus des orifices (110), un anneau (100, 102) s'étirant dans le sens vertical et un s'étirant dans le sens radial qui sont reliés entre eux par l'intermédiaire de ponts, ainsi qu'une collerette formée à l'extrémité supérieure de l'anneau vertical et destinée à fermer les canaux (60).

8. Filtre de lavage à contre-courant selon l'une quelconque des revendications précédentes, **caractérisé en ce que** l'élément de filtre (44) présente plusieurs barres verticales (54) et au moins une partie des barres (54) sont pourvues en plus d'un canal (60) qui relie la zone (126) située en dehors de la section de filtre supérieure (68) à la zone située dans l'élément de fond (78) par l'intermédiaire d'un perçage (62).

9. Filtre de lavage à contre-courant selon la revendication 8, **caractérisé en ce que** des segments annulaires (64) situés près les uns au-dessus des autres et formant des espaces intermédiaires sont formés les uns au-dessus des autres entre les barres (54).

10. Filtre de lavage à contre-courant selon l'une quelconque des revendications précédentes, **caractérisé en ce que** le déversoir (94) est disposé dans le fond de la tasse de filtre (30) et peut être fermé par un robinet d'arrêt (92).
